# EUROPEAN PATENT SPECIFICATION

(11) **EP 4 112 395 B1**
(45) Date of publication and mention of the grant of the patent: **23.04.2025**
(21) Application number: 20922407.0
(22) Date of filing: 25.12.2020
(51) Int. Cl.: B60R 21/231, B60R 21/237, B60R 21/233

(54) **AIRBAG AND FOLDING METHOD FOR AIRBAG**
AIRBAG UND FALTVERFAHREN FÜR EINEN AIRBAG
COUSSIN DE SÉCURITÉ GONFLABLE ET PROCÉDÉ DE PLIAGE POUR COUSSIN DE SÉCURITÉ GONFLABLE

(30) Priority: 26.02.2020 CN 202010117984
(43) Date of publication of application: 04.01.2023
(73) Proprietor: Autoliv Development AB, 44783 Vargarda (SE)
(72) Inventor: MENG, Qiang, Shanghai 201807 (CN); YUAN, Peng, Shanghai 201807 (CN)
(74) Representative: Feucker, Max Martin
(86) International application number: PCT/CN2020/139356
(87) International publication number: WO 2021/169544

(56) References cited:
- EP-A1- 3 483 012
- CN-A- 1 521 060
- CN-A- 104 908 699
- CN-A- 105 189 215
- CN-A- 107 571 832
- CN-A- 109 941 221
- CN-A- 110 329 197
- CN-U- 205 801 020
- JP-A- 2002 187 515
- JP-A- 2013 147 041
- US-A1- 2005 070 414
- US-B1- 9 272 684

## Description

### TECHNICAL FIELD

The present invention relates to a safety device of a vehicle, in particular, to a safety airbag and a folding method for a safety airbag.

### BACKGROUND

With the increasing experience in the manufacture and use of safety airbags, people are more and more aware of the engineering challenges faced by the design, construction and use of the airbags. Most safety airbags are designed to inflate quickly and provide cushioning near occupants. Many of these air bags are configured to be placed in front of the vehicle occupants. The placement of an airbag is determined based on the assumption of the position of a vehicle occupant during normal operation of a vehicle. Thus, when the occupant is within a predetermined position range during inflation of the safety airbag, the occupant may obtain the best protection of the particular safety airbag.

In certain cases, injury occurs when the occupant is "at an inappropriate position" relative to the assumed position described above. Improper inflation of the safety airbag may also cause injury similar to the injury caused when being at an inappropriate position. Improper inflation may cause the airbag to be at a poor position when contacting the occupant, or cause the safety airbag to enter the space reserved for the occupant. Such intrusion during inflation may increase the likelihood of injury to vehicle occupants.

An overhead safety airbag is developed to replace a front safety airbag. Such overhead safety airbag is advantageous in certain cases because the overhead safety airbag is inflated in place without applying force directly to vehicle occupants. In addition, positioning a safety airbag in a roof of a vehicle allows greater design flexibility of a steering wheel and/or a dashboard component of the vehicle.

One of the difficulties when designing and mounting the overhead safety airbag is how to control the trajectory of the inflation of the overhead safety airbag. More specifically, if the safety airbag is inflated too fast or too slowly when expanding from the roof, the safety airbag may not be able to provide protection for occupants, or may even hurt the occupants. A safety airbag with the features of the preamble of claim 1 is known from JP 2013 147041 A. Further safety airbags are known from US 2005/070414 A1 and EP 3 483 012 A1.

Therefore, a safety airbag having high inflation stability is desired.

### SUMMARY

An objective of the present invention is to provide a safety airbag having high inflation stability and a folding method for a safety airbag.

The safety airbag of the present invention is defined by claim 1.

According to an embodiment of the present invention, the first airbag cavity further comprises a first end and a second end, wherein the first end is configured to be fixed to a mounting position; the second end is configured as a free end; and when the safety air bag is in the stowed state, the second end is folded toward the first end to form an end fold portion.

According to the present invention, when the safety airbag is in the stowed state, the second airbag cavity has a left fold portion and a right fold portion arranged in the second direction.

According to an embodiment of the present invention, the left fold portion and/or the right fold portion of the second airbag cavity comprises an "N"-shaped fold portion.

According to an embodiment of the present invention, the left covering part and the right covering part of the first airbag cavity are arranged to be spaced apart by a distance in the second direction.

According to an embodiment of the present invention, the safety airbag further comprises an opening at the first end of the first airbag cavity, and the opening is configured to be in communication with a gas generator.

According to an embodiment of the present invention, the end fold portion comprises an "N"-shaped fold portion proximate to the first end.

According to an embodiment of the present invention, the end fold portion further comprises a rolled fold portion adjacent to the "N"-shaped fold portion, and the second end is located within the rolled fold portion.

According to an embodiment of the present invention, the first airbag cavity is configured to be in a flat shape when in the inflated state, and the second airbag cavity is configured to have a bilaterally symmetrical structure when in the inflated state.

According to an embodiment of the present invention, the second direction is perpendicular to the first direction.

A folding mehod according to the present invention is defined by claim 10.

The folding method comprises the following steps:
when the safety airbag is in an inflated state, folding the left part and the right part inwards such that the left part and the right part each cover part of the second airbag cavity so as to completely cover the second airbag cavity from the left and right sides,
wherein the second direction is different from the first direction.

According to an embodiment of the present invention, the first airbag cavity further comprises a first end and a second end, wherein the first end is configured to be fixed to a mounting position; the second end is configured as a free end; and the folding method further comprises the step of folding the second end toward the first end.

According to an embodiment of the present invention, before the step of folding the left part and the right part inwards, the left and right sides of the second airbag cavity are folded in the second direction respectively.

According to an embodiment of the present invention, the left side and/or the right side of the second airbag cavity is folded in the second direction in an "N" shape.

According to an embodiment of the present invention, the second end is folded toward the first end in an "N" shape or in an "N" shape in conjunction with a rolling manner.

### BRIEF DESCRIPTION OF THE DRAWINGS

FIG. 1 shows a schematic diagram of a safety airbag in an inflated state according to an embodiment of the present invention.
FIG. 2(a) to FIG. 2(g) show schematic diagrams of a folding method for a safety airbag according to an embodiment of the present invention.
FIG. 3(a) to FIG. 3(g) other schematic diagrams of a folding method for a safety airbag according to an embodiment of the present invention.

### DETAILED DESCRIPTION

Specific embodiments of a safety airbag and a folding method for a safety airbag according to the present invention will be described below with reference to the accompanying drawings. The following detailed description and the accompanying drawings are used to illustratively explain the principles of the present invention. The present invention is not limited to the described preferred embodiments, and the protection scope of the present invention is defined by the claims.

In addition, terms for spatial relations (such as "upper", "lower", "left" and "right") are used to describe a relative positional relationship between an element and another element shown in the accompanying drawings. Therefore, when used, the terms for spatial relations may be applied to directions different from those shown in the accompanying drawings. Obviously, although all of these terms for spatial relations refer to the directions shown in the accompanying drawings for ease of explanation, a person skilled in the art will appreciate that directions different from those shown in the drawings may be used.

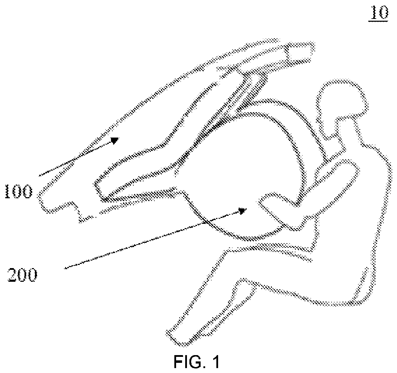

FIG. 1 shows a schematic diagram of a safety airbag in an inflated state according to an embodiment of the present invention. The safety airbag according to an embodiment of the present invention is described below with reference to FIG. 1.

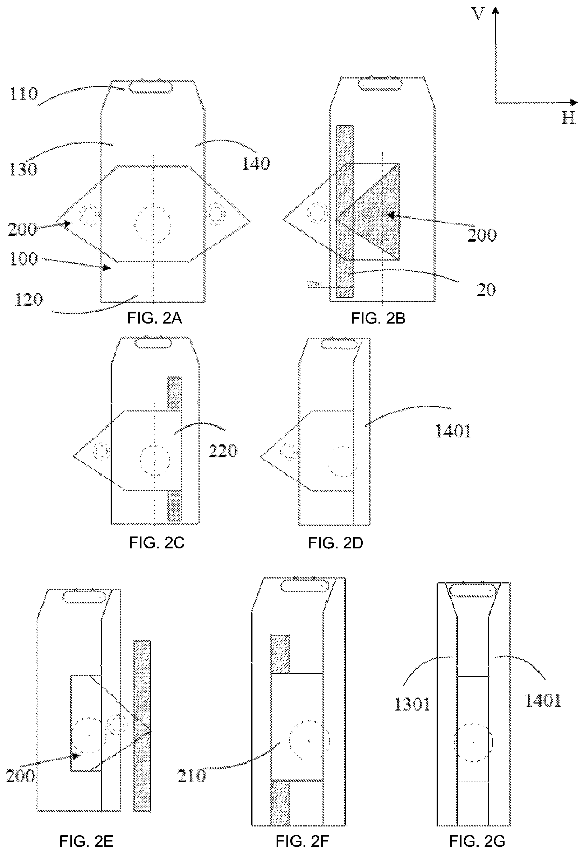

As shown in FIG. 1, the safety airbag 10 includes a first airbag cavity 100 and a second airbag cavity 200. According to an exemplary embodiment, the first airbag cavity 100 is configured to be in a flat shape when in the inflated state, and the second airbag cavity 200 is configured to have a bilaterally symmetrical structure when in the inflated state (which is better shown in FIG. 2(a)). The second airbag cavity 200 is arranged on a panel of the first airbag cavity 100 (i.e., a passenger-facing panel shown in FIG. 1). Moreover, when the safety airbag 10 is in the inflated state, the size of the second airbag cavity 200 in the first direction is smaller than the size of the first airbag cavity 100 in the first direction. In FIG. 1, the first direction is specifically a vertical direction of a passenger. In an exemplary embodiment, the safety airbag 10 can further include an opening at a first end 110 of the first airbag cavity 100, and the opening is configured to be in communication with a gas generator.

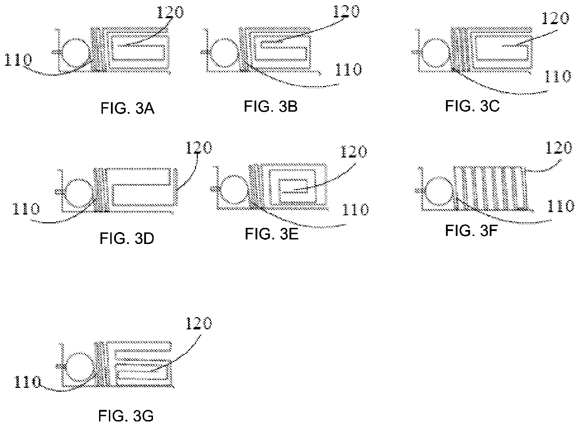

FIG. 2(a) to FIG. 2(g) show schematic diagrams of a folding method for a safety airbag according to an embodiment of the present invention. FIG. 3(a) to FIG. 3(g) other schematic diagrams of a folding method for a safety airbag according to an embodiment of the present invention. The folding method for a safety air bag according to an embodiment of the present invention is described below with reference to FIG. 2(a) to FIG. 2(g) and FIG. 3(a) to FIG. 3(g).

In FIG. 2(a) to FIG. 2(g), a first direction V and a second direction H are specified. The first direction V corresponds to the vertical direction of the passenger in FIG. 1, and the second direction H corresponds to a horizontal direction of the passenger in FIG. 1. The first airbag cavity 100 of the safety airbag 10 further includes a first end 110 and a second end 120, and the first airbag cavity 100 further has a left part 130 and a right part 140 that are arranged in the second direction H. In an exemplary embodiment, the first end 110 is configured to be fixed to a mounting position (for example, a roof of a vehicle), and the second end 120 is configured as a free end.

Still referring to FIG. 2(a) to FIG. 2(g), a folding method for a safety airbag according to an embodiment of the present invention is described, and in FIG. 2(a) to FIG. 2(g), a folding plate 20 is used to assist in the folding of the safety airbag.

As shown in FIG. 2(a), the safety airbag 10 is spread out with the first airbag cavity 100 being under the second airbag cavity 200. In other words, a windshield-facing side of the safety airbag 10 is placed face down, and a passenger-facing side of the safety airbag 10 is placed face up. Next, as shown in FIG. 2(b), with the assistance of the folding plate 20, the right side of the second airbag cavity 200 is folded inwards in the second direction H. After that, as shown in FIG. 2(c), also with the assistance of the folding plate 20, the right side of the second airbag cavity 200 that has been folded once is folded outwards in the second direction H, that is, the right side of the second airbag cavity 200 is folded in an "N" shape to form a right fold portion 220 of the second airbag cavity 200. And then, as shown in FIG. 2(d), the right part 140 of the first airbag cavity 100 is folded inwards to form a right covering part 1401 so as to cover the second airbag cavity 200 from the right side.

Similar to the folding method as shown in FIG. 2(b) to FIG. 2(d), a method for folding a left fold portion 210 of the second airbag cavity 200 and a left covering part 1301 of the first airbag cavity 100 to cover the second airbag cavity 200 from the left side is shown in FIG. 2(e) to FIG. 2(g).

After the safety airbag 10 is folded according to the folding method described above with reference to FIG. 2(a) to FIG. 2(g), the safety airbag 10 is in a stowed state. When the safety airbag 10 is in the stowed state, the left part 130 and the right part 140 of the first airbag cavity 100 are folded inwards to form the left covering part 1301 and the right covering part 1401. The left covering part 1301 and the right covering part 1401 each can be configured to cover part of the second airbag cavity 200 so as to completely cover the second airbag cavity 200 from the left and right sides. It should be noted that the steps of the folding method described in FIG. 2(a) to FIG. 2(g) are merely exemplary, and the folding method for a safety airbag of the present invention is not limited thereto. For example, the first airbag cavity can be folded after two sides of the second airbag cavity are folded to form a left fold portion and a right fold portion. As another example, two sides of the second airbag cavity can be folded in a folding manner other than the "N"-shaped folding manner. As another example, a folding plate may not be used.

Accordingly, in the safety airbag obtained by the folding method for a safety airbag according to the present invention, the first airbag cavity and the second airbag cavity both have a smaller transverse dimension, and the second airbag cavity is covered by the first airbag cavity from the left and right sides, thereby enabling effective control of the inflation speed of the second airbag cavity, such that the second airbag cavity can be inflated after being located at a desired operating position so as to improve the stability of the safety airbag during expansion and inflation.

In an exemplary embodiment, instead of or in addition to the "N"-shaped fold portion, the left fold portion 210 and the right fold portion 220 of the second airbag cavity 200 can further include a rolled fold portion formed by folding in a rolling manner.

In an exemplary embodiment, the left covering part 1301 and the right covering part 1401 of the first airbag cavity 100 are arranged to be spaced apart by a distance in the second direction H.

In an exemplary embodiment, the second direction H is perpendicular to the first direction V. However, this is merely an example. As long as the condition in which the second direction is different from the first direction is met, other configurations can be applied as appropriate..

The folding method for a safety airbag according to an embodiment of the present invention is further described below with reference to FIG. 3(a) to FIG. 3(g). After the folding step shown in FIG. 2(g), the second end 120 can also be folded toward the first end 10. FIG. 3(a) to FIG. 3(g) show an embodiment in which the second end 120 is folded toward the first end 10. It can be seen that the second end 120 is folded toward the first end 10 to form an end fold portion, so that the size of the safety airbag 10 in the stowed state is further reduced. In particular, the size of the safety airbag 10 in the lengthwise direction is reduced. In one exemplary embodiment, the second end 120 is folded toward the first end 110 only in an "N" shape. As shown in FIG. 3(d) and FIG. 3(f), in particular in FIG. 3(d), the end fold portion includes a plurality of "N"-shaped fold portions extending in different directions, i.e., an "N"-shaped fold portion that extends in the vertical direction in the middle of FIG. 3(d) and "N"-shaped fold portions that are located on two sides and extend in the horizontal direction. In another exemplary embodiment, as shown in FIG. 3(a) to FIG. 3(g) and FIG. (e) and FIG. (g), the second end 120 is folded toward the first end 110 in an "N" shape in conjunction with a rolling manner, and the second end 120 is located within the rolled fold portion, so that the end fold portion includes an "N"-shaped fold portion proximate to the first end 110 and a rolled fold portion adjacent to the "N"-shaped fold portion.

Thus, the "N"-shaped folding and rolling folding of the safety airbag 10 both facilitate the rapid in-place inflation of the first airbag cavity 100 of the safety airbag 10. Particularly in an overhead safety airbag, gas jet flow generated by the gas generator will cause the safety airbag to be quickly inflated forward and downward into place along a windshield. Thus, in the safety airbag of the present invention, prior to significant expansion and inflation of the safety airbag toward a passenger, the safety airbag has already been located at the desired operating position, thereby improving the stability of the safety airbag during expansion and inflation.

As described above, although the exemplary embodiments of the present invention have been described with reference to the accompanying drawings in the description, the present invention is not limited to the aforementioned specific embodiments, and the protection scope of the present invention is defined by the claims.

## Claims

1. A safety airbag (10), wherein
the safety airbag comprises a first airbag cavity (100) and a second airbag cavity (200); the second airbag cavity (200) is arranged on a panel of the first airbag cavity (100); and when the safety airbag (10) is in an inflated state, the size of the second airbag cavity (200) in a first direction (V) is smaller than the size of the first airbag cavity (100) in the first direction (V); and
the first airbag cavity (100) has a left part (130) and a right part (140) that are arranged in a second direction (H); when the safety airbag (10) is in a stowed state, the left part (130) and the right part (140) are folded inwards to form a left covering part (1301) and a right covering part (1401), wherein the second direction (H) is different from the first direction (V); **characterized in that** the left covering part (1301) and the right covering part (1401) are each configured to cover part of the second airbag cavity (200) so as to completely cover the second airbag cavity (200) from the left and right sides, wherein
when the safety airbag (10) is in the stowed state, the second airbag cavity (200) has a left fold portion (210) and a right fold portion (220) arranged in the second direction (H).

2. The safety airbag (10) according to claim 1, wherein the first airbag cavity (100) further comprises a first end (110) and a second end (120), wherein the first end (110) is configured to be fixed to a mounting position; the second end (120) is configured as a free end; and when the safety airbag (10) is in the stowed state, the second end (120) is folded toward the first end (110) to form an end fold portion.

3. The safety airbag (10) according to claim 1 or 2, wherein the left fold portion (210) and/or the right fold portion (220) of the second airbag cavity (200) comprises an "N"-shaped fold portion.

4. The safety airbag (10) according to claim 3, wherein the left covering part (1301) and the right covering part (1401) of the first airbag cavity (100) are arranged to be spaced apart by a distance in the second direction (H).

5. The safety airbag (10) according to claim 4, wherein the safety airbag (10) further comprises an opening at the first end (110) of the first airbag cavity (100), and the opening is configured to be in communication with a gas generator.

6. The safety airbag (10) according to claim 5, wherein the end fold portion comprises an "N"-shaped fold portion proximate to the first end (110).

7. The safety airbag (10) according to claim 6, wherein the end fold portion further comprises a rolled fold portion adjacent to the "N"-shaped fold portion, and the second end (120) is located within the rolled fold portion.

8. The safety airbag (10) according to claim 7, wherein the first airbag cavity (100) is configured to be in a flat shape when in the inflated state, and the second airbag cavity (200) is configured to have a bilaterally symmetrical structure when in the inflated state.

9. The safety airbag (10) according to claim 8, wherein the second direction (V) is perpendicular to the first direction (H).

10. A folding method for a safety airbag (10), the safety airbag (10) comprising a first airbag cavity (100) and a second airbag cavity (200), wherein the second airbag cavity (200) is arranged on a panel of the first airbag cavity (100); when the safety airbag (10) is in an inflated state, the size of the second airbag cavity (200) in a first direction (V) is smaller than the size of the first airbag cavity (100) in the first direction (V); and the first airbag cavity (100) has a left part (130) and a right part (140) that are arranged in a second direction (H),
**characterized in that**, the folding method comprises the following steps:
when the safety airbag (10) is in the inflated state, folding the left part (130) and the right part (140) inwards such that the left part and the right part each cover part of the second airbag cavity (200) so as to completely cover the second airbag cavity (200) from the left and right sides,
wherein the second direction (H) is different from the first direction (V) and
wherein when the safety airbag (10) is in the stowed state, the second airbag cavity (200) has a left fold portion (210) and a right fold portion (220) arranged in the second direction (H).

11. The folding method according to claim 10, wherein the first airbag cavity (100) further comprises a first end (110) and a second end (120), wherein the first end (110) is configured to be fixed to a mounting position; the second end (120) is configured as a free end; and the folding method further comprises the step of folding the second end (120) toward the first end (110).

12. The folding method according to claim 11, wherein before the step of folding the left part (130) and the right part (140) inwards, the left and right sides of the second airbag cavity (200) are folded in the second direction (H) respectively.

13. The folding method according to claim 12, wherein the left side and/or the right side of the second airbag cavity (200) is folded in the second direction (H) in an "N" shape.

14. The folding method according to claim 13, wherein the second end (120) is folded toward the first end (110) in an "N" shape or in an "N" shape in conjunction with a rolling manner.

## Patentansprüche

1. Sicherheitsairbag (10), wobei
der Sicherheitsairbag einen ersten Airbaghohlraum (100) und einen zweiten Airbaghohlraum (200) umfasst; der zweite Airbaghohlraum (200) auf einer Bahn des ersten Airbaghohlraums (100) angeordnet ist; und, wenn sich der Sicherheitsairbag (10) in einem aufgeblasenen Zustand befindet, die Größe des zweiten Airbaghohlraums (200) in einer ersten Richtung (V) kleiner als die Größe des ersten Airbaghohlraums (100) in der ersten Richtung (V) ist; und
der erste Airbaghohlraum (100) einen linken Teil (130) und einen rechten Teil (140) aufweist, die in einer zweiten Richtung (H) angeordnet sind; wenn sich der Sicherheitsairbag (10) in einem verstauten Zustand befindet, der linke Teil (130) und der rechte Teil (140) nach innen gefaltet sind, um einen linken Abdeckungsteil (1301) und einen rechten Abdeckungsteil (1401) auszubilden, wobei sich die zweite Richtung (H) von der ersten Richtung (V) unterscheidet; **dadurch gekennzeichnet, dass** das linke Abdeckungsteil (1301) und das rechte Abdeckungsteil (1401) jeweils konfiguriert sind, um einen Teil des zweiten Airbaghohlraums (200) abzudecken, um den zweiten Airbaghohlraum (200) von der linken und der rechten Seite vollständig abzudecken, wobei,
wenn sich der Sicherheitsairbag (10) in dem verstauten Zustand befindet, der zweite Airbaghohlraum (200) einen linken Faltenabschnitt (210) und einen rechten Faltenabschnitt (220) aufweist, die in der zweiten Richtung (H) angeordnet sind.

2. Sicherheitsairbag (10) nach Anspruch 1, wobei der erste Airbaghohlraum (100) ferner ein erstes Ende (110) und ein zweites Ende (120) umfasst, wobei das erste Ende (110) konfiguriert ist, um an einer Montageposition befestigt zu werden; das zweite Ende (120) als ein freies Ende konfiguriert ist; und, wenn sich der Sicherheitsairbag (10) in dem verstauten Zustand befindet, das zweite Ende (120) zu dem ersten Ende (110) hin gefaltet wird, um einen Endfaltabschnitt auszubilden.

3. Sicherheitsairbag (10) nach Anspruch 1 oder 2, wobei der linke Faltenabschnitt (210) und/oder der rechte Faltenabschnitt (220) des zweiten Airbaghohlraums (200) einen "N"-förmigen Faltenabschnitt umfasst.

4. Sicherheitsairbag (10) nach Anspruch 3, wobei das linke Abdeckungsteil (1301) und das rechte Abdeckungsteil (1401) des ersten Airbaghohlraums (100) angeordnet sind, um in der zweiten Richtung (H) um eine Distanz voneinander beabstandet zu sein.

5. Sicherheitsairbag (10) nach Anspruch 4, wobei der Sicherheitsairbag (10) ferner eine Öffnung an dem ersten Ende (110) des ersten Airbaghohlraums (100) umfasst und die Öffnung konfiguriert ist, um mit einem Gasgenerator in Verbindung zu stehen.

6. Sicherheitsairbag (10) nach Anspruch 5, wobei der Endfaltabschnitt einen "N"-förmigen Faltenabschnitt nahe dem ersten Ende (110) umfasst.

7. Sicherheitsairbag (10) nach Anspruch 6, wobei der Endfaltabschnitt ferner einen gerollten Faltenabschnitt angrenzend an den "N"-förmigen Faltenabschnitt umfasst und das zweite Ende (120) innerhalb des gerollten Faltenabschnitts gelegen ist.

8. Sicherheitsairbag (10) nach Anspruch 7, wobei der erste Airbaghohlraum (100) konfiguriert ist, um sich in einer flachen Form zu befinden, wenn er in dem aufgeblasenen Zustand ist, und der zweite Airbaghohlraum (200) konfiguriert ist, um eine bilateral symmetrische Struktur aufzuweisen, wenn er in dem aufgeblasenen Zustand ist.

9. Sicherheitsairbag (10) nach Anspruch 8, wobei die zweite Richtung (V) senkrecht zu der ersten Richtung (H) ist.

10. Faltverfahren für einen Sicherheitsairbag (10), der Sicherheitsairbag (10) umfassend einen ersten Airbaghohlraum (100) und einen zweiten Airbaghohlraum (200), wobei der zweite Airbaghohlraum (200) auf einer Bahn des ersten Airbaghohlraums (100) angeordnet ist; wenn sich der Sicherheitsairbag (10) in einem aufgeblasenen Zustand befindet, die Größe des zweiten Airbaghohlraums (200) in einer ersten Richtung (V) kleiner als die Größe des ersten Airbaghohlraums (100) in der ersten Richtung (V) ist; und der erste Airbaghohlraum (100) einen linken Teil (130) und einen rechten Teil (140) aufweist, die in einer zweiten Richtung (H) angeordnet sind,
**dadurch gekennzeichnet, dass** das Faltverfahren die folgenden Schritte umfasst:
wenn sich der Sicherheitsairbag (10) in dem aufgeblasenen Zustand befindet, Falten des linken Teils (130) und des rechten Teils (140) nach innen, sodass der linke Teil und der rechte Teil jeweils den Teil des zweiten Airbaghohlraums (200) abdecken, um den zweiten Airbaghohlraum (200) von der linken und der rechten Seite vollständig abzudecken,
wobei die zweite Richtung (H) von der ersten Richtung (V) verschieden ist und
wobei, wenn sich der Sicherheitsairbag (10) in dem verstauten Zustand befindet, der zweite Airbaghohlraum (200) einen linken Faltenabschnitt (210) und einen rechten Faltenabschnitt (220) aufweist, die in der zweiten Richtung (H) angeordnet sind.

11. Faltverfahren nach Anspruch 10, wobei der erste Airbaghohlraum (100) ferner ein erstes Ende (110) und ein zweites Ende (120) umfasst, wobei das erste Ende (110) konfiguriert ist, um an einer Montageposition befestigt zu werden; das zweite Ende (120) als ein freies Ende konfiguriert ist; und das Faltverfahren ferner den Schritt des Faltens des zweiten Endes (120) zu dem ersten Ende (110) hin umfasst.

12. Faltverfahren nach Anspruch 11, wobei, vor dem Schritt des Faltens des linken Teils (130) und des rechten Teils (140) nach innen, die linke beziehungsweise die rechte Seite des zweiten Airbaghohlraums (200) in die zweite Richtung (H) gefaltet werden.

13. Faltverfahren nach Anspruch 12, wobei die linke Seite und/oder die rechte Seite des zweiten Airbaghohlraums (200) in die zweite Richtung (H) in einer "N"-Form gefaltet wird.

14. Faltverfahren nach Anspruch 13, wobei das zweite Ende (120) in einer "N"-Form oder zusammen mit einer Rollmethode in einer "N"-Form zu dem ersten Ende (110) hin gefaltet wird.

## Revendications

1. Coussin de sécurité gonflable (10), dans lequel
le coussin de sécurité gonflable comprend une première cavité de coussin de sécurité gonflable (100) et une seconde cavité de coussin de sécurité gonflable (200) ; la seconde cavité de coussin de sécurité gonflable (200) est agencée sur un panneau de la première cavité de coussin de sécurité gonflable (100) ; et lorsque le coussin de sécurité gonflable (10) est dans un état déplié, la taille de la seconde cavité de coussin de sécurité gonflable (200) dans une première direction (V) est inférieure à la taille de la première cavité de coussin de sécurité gonflable (100) dans la première direction (V) ; et
la première cavité de coussin de sécurité gonflable (100) a une partie gauche (130) et une partie droite (140) qui sont agencées dans une seconde direction (H) ; lorsque le coussin de sécurité gonflable (10) est dans un état plié, la partie gauche (130) et la partie droite (140) sont repliées vers l'intérieur pour former une partie de recouvrement gauche (1301) et une partie de recouvrement droite (1401), dans lequel la seconde direction (H) est différente de la première direction (V) ; **caractérisé en ce que** la partie de recouvrement gauche (1301) et la partie de recouvrement droite (1401) sont chacune conçues pour couvrir une partie de la seconde cavité de coussin de sécurité gonflable (200) de manière à couvrir complètement la seconde cavité de coussin de sécurité gonflable (200) des côtés gauche et droit, dans lequel
lorsque le coussin de sécurité gonflable (10) est dans l'état plié, la seconde cavité de coussin de sécurité gonflable (200) comporte une partie pliable à gauche (210) et une partie pliable à droite (220) agencées dans la seconde direction (H).

2. Coussin de sécurité gonflable (10) selon la revendication 1, dans lequel la première cavité de coussin de sécurité gonflable (100) comprend en outre une première extrémité (110) et une seconde extrémité (120), dans lequel la première extrémité (110) est conçue pour être fixée à une position de montage ; la seconde extrémité (120) est conçue comme une extrémité libre ; et lorsque le coussin de sécurité gonflable (10) est dans l'état plié, la seconde extrémité (120) est repliée vers la première extrémité (110) pour former une partie de pliage d'extrémité.

3. Coussin de sécurité gonflable (10) selon la revendication 1 ou 2, dans lequel la partie de pliage gauche (210) et/ou la partie de pliage droite (220) de la seconde cavité de coussin de sécurité (200) comprend une partie pliée en forme de « N ».

4. Coussin de sécurité gonflable (10) selon la revendication 3, dans lequel la partie de recouvrement gauche (1301) et la partie de recouvrement droite (1401) de la première cavité de coussin de sécurité gonflable (100) sont agencées de manière à être espacées d'une distance dans la seconde direction (H).

5. Coussin de sécurité gonflable (10) selon la revendication 4, dans lequel le coussin de sécurité gonflable (10) comprend en outre une ouverture à la première extrémité (110) de la première cavité de coussin de sécurité (100), et l'ouverture est conçue pour être en communication avec un générateur de gaz.

6. Coussin de sécurité gonflable (10) selon la revendication 5, dans lequel la partie de pliage d'extrémité comprend une partie de pliage en forme de « N » à proximité de la première extrémité (110).

7. Coussin de sécurité gonflable (10) selon la revendication 6, dans lequel la partie de pliage d'extrémité comprend en outre une partie de pliage enroulée adjacente à la partie de pliage en forme de « N », et la seconde extrémité (120) est située à l'intérieur de la partie de pliage enroulée.

8. Coussin de sécurité gonflable (10) selon la revendication 7, dans lequel la première cavité de coussin de sécurité gonflable (100) est conçue pour avoir une forme plate à l'état déplié, et la seconde cavité de coussin de sécurité gonflable (200) est conçue pour avoir une structure à symétrie bilatérale à l'état déplié.

9. Coussin de sécurité gonflable (10) selon la revendication 8, dans lequel la seconde direction (V) est perpendiculaire à la première direction (H).

10. Procédé de pliage d'un coussin de sécurité gonflable (10), le coussin de sécurité gonflable (10) comprenant une première cavité de coussin de sécurité gonflable (100) et une seconde cavité de coussin de sécurité gonflable (200), dans lequel la seconde cavité de coussin de sécurité gonflable (200) est agencée sur un panneau de la première cavité de coussin de sécurité gonflable (100) ; lorsque le coussin de sécurité gonflable (10) est dans un état déplié, la taille de la seconde cavité de coussin de sécurité gonflable (200) dans une première direction (V) est inférieure à la taille de la première cavité de coussin de sécurité gonflable (100) dans la première direction (V) ; et la première cavité de coussin de sécurité gonflable (100) a une partie gauche (130) et une partie droite (140) qui sont agencées dans une seconde direction (H),
**caractérisé en ce que** le procédé de pliage comprend les étapes suivantes :
lorsque le coussin de sécurité gonflable (10) est dans l'état déplié, le pliage de la partie gauche (130) et la partie droite (140) vers l'intérieur de telle sorte que la partie gauche et la partie droite couvrent chacune une partie de la seconde cavité de coussin de sécurité gonflable (200) de manière à couvrir complètement la seconde cavité de coussin de sécurité gonflable (200) des côtés gauche et droit,
dans lequel la seconde direction (H) est différente de la première direction (V) et
dans lequel, lorsque le coussin de sécurité gonflable (10) est dans l'état plié, la seconde cavité de coussin de sécurité gonflable (200) comporte une partie pliable à gauche (210) et une partie pliable à droite (220) agencées dans la seconde direction (H).

11. Procédé de pliage selon la revendication 10, dans lequel la première cavité de coussin de sécurité gonflable (100) comprend en outre une première extrémité (110) et une seconde extrémité (120), dans lequel la première extrémité (110) est conçue pour être fixée à une position de montage ; la seconde extrémité (120) est conçue comme une extrémité libre ; et le procédé de pliage comprend en outre l'étape consistant à plier la seconde extrémité (120) vers la première extrémité (110).

12. Procédé de pliage selon la revendication 11, dans lequel, avant l'étape de pliage de la partie gauche (130) et de la partie droite (140) vers l'intérieur, les côtés gauche et droit de la seconde cavité de coussin de sécurité gonflable (200) sont pliés dans la seconde direction (H) respectivement.

13. Procédé de pliage selon la revendication 12, dans lequel le côté gauche et/ou le côté droit de la seconde cavité de coussin de sécurité gonflable (200) est plié dans la seconde direction (H) en forme de « N ».

14. Procédé de pliage selon la revendication 13, dans lequel la seconde extrémité (120) est pliée vers la première extrémité (110) en forme de « N » ou en forme de « N » en conjonction avec un laminage.
